# EUROPEAN PATENT SPECIFICATION

(11) **EP 3 447 421 B1**
(45) Date of publication and mention of the grant of the patent: **26.05.2021**
(21) Application number: 17834697.9
(22) Date of filing: 19.07.2017
(51) Int. Cl.: F25D 23/12, F25C 5/00, H02P 8/00, F25C 5/04

(54) **ICE-MAKING APPARATUS AND REFRIGERATOR COMPRISING SAME**
EISHERSTELLUNGSVORRICHTUNG UND KÜHLSCHRANK DAMIT
APPAREIL DE FABRICATION DE GLACE ET RÉFRIGÉRATEUR LE COMPRENANT

(30) Priority: 28.07.2016 KR 20160096372; 31.05.2017 KR 20170068048; 31.05.2017 KR 20170068066; 22.06.2017 KR 20170079313
(43) Date of publication of application: 27.02.2019
(73) Proprietor: Dae Chang Co., Ltd., Jeongeup-si, Jeollabuk-do 56167 (KR)
(72) Inventor: JI, Joondong, Suwon-si Gyeonggi-do 16231 (KR); AN, Jinhyok, Hwaseong-si Gyeonggi-do 18426 (KR); KIM, Jongmyung, Gunpo-si Gyeonggi-do 15827 (KR)
(74) Representative: RGTH
(86) International application number: PCT/KR2017/007776
(87) International publication number: WO 2018/021755

(56) References cited:
- EP-A2- 2 660 541
- JP-A- 2000 074 533
- JP-A- 2001 147 060
- JP-A- 2001 147 060
- KR-B1- 0 151 868
- KR-B1- 101 258 437
- KR-B1- 101 306 578

## Description

### [Technical Field]

The present invention relates to an ice maker and a refrigerator including the same.

### [Background Art]

In general, a refrigerator includes a main body, a compressor and a heat exchanger. The main body has a chilling compartment for keeping foods refrigerated and a freezing compartment for keeping foods frozen, the compressor serves to compress a refrigerant, and the heat exchanger serves to generate cold air. The compressor and the heat exchanger are installed at the rear of the main body. The cold air generated through the heat exchanger is supplied to the chilling compartment or the freezing compartment by a fan, and then circulates through the chilling compartment or the freezing compartment. The cold air of which the temperature is increased during the circulation is passed through the heat exchanger and then supplied to the chilling compartment or the freezing compartment. In this way, the foods stored in the chilling compartment or the freezing compartment can be maintained in a fresh state. The chilling compartment or the freezing compartment may have an ice maker installed therein.

The ice maker installed in the refrigerator contains automatically supplied water in an ice tray, and checks an ice making state. When ice is completely made, the ice maker separates the ice from the ice tray such that the ice is loaded in a separate ice container. Since the ice maker allows a user to get ice without a separate operation, the ice maker is recently widely used.

Such an ice maker may be divided into an ice maker which includes an ejector and heater to separate ice and an ice maker that twists a tray. Since the ice maker that twists a tray does not use a heater, the ice maker has higher energy efficiency than the ice make including an ejector and heater. However, the ice maker that twists a tray must return the tray to the original position after twisting the tray. Thus, the ice maker needs to rotate the tray in the reverse direction as well as the forward direction. For this operation, the ice maker uses a DC motor. Conventionally, a brush motor has been used as the DC motor for a long time.

However, since the brush motor uses a brush formed of carbon, dust is caused with time. For this reason, the lifetime of the brush motor is limited, and the inside of the refrigerator around the brush motor may be contaminated by the dust. Furthermore, since the brush motor generates severe noise and vibration, a user may have an unpleasant feeling. Moreover, since the brush motor consumes a large amount of current and generates a considerable amount of heat in operation, the energy efficiency is inevitably reduced. In addition, a driving force of the motor is uniformly transferred while the tray is twisted. Thus, the ice making process may not be efficiently performed.

### [Related Art Document]

### [Patent Document]

Korean Patent Registration No. 10-1366559 registered on February 26, 2014

Japanese Patent Application No. JP 2001 147060 A which relates to an automatic ice making machine for a refrigerator. However, JP 2001 147060 A fails to disclose that, in a rotation section in which the ice-making tray is twisted by a rotational power corresponding to a signal or a rotation speed difference formed at the time of interlocking between gears within a gear part, the speed of a motor part for the ice-making tray changes at least one time.

### [Disclosure]

### [Technical Problem]

An object of the present invention is to provide an ice maker which can divide a rotation section of an ice tray rotated by a motor into a high-speed/low-torque section and a low-speed/high-torque section such that a force of the motor can be efficiently used for ice separation.

Another object of the present invention is to provide an ice maker which can divide a rotation section of an ice tray rotated by a motor, and form a predetermined coupling section of two gears such that a force of the motor can be efficiently used for ice separation through the coupling of the two gears.

A still another object of the present invention is to provide a refrigerator including an ice maker which can divide a rotation section of an ice tray rotated by a motor into a high-speed/low-torque section and a low-speed/high-torque section such that a force of the motor can be efficiently used for ice separation.

A yet another object of the present invention is to provide is a refrigerator including an ice maker which can divide a rotation section of an ice tray rotated by a motor, and form a predetermined coupling section of two gears such that a force of the motor can be efficiently used for ice separation through the coupling of the two gears.

A still yet another object of the present invention is to provide an ice maker capable of preventing contamination which may be caused by a motor.

A further object of the present invention is to provide an ice maker including a motor having a semi-permanent lifetime.

Another further object of the present invention is to provide an ice maker capable of reducing heat generated from a motor.

Still another further object of the present invention is to provide an ice maker having low noise and vibration.

Yet another further object of the present invention is to provide an ice maker capable of freely controlling a motor.

### [Technical Solution]

In one general aspect, there is provided an ice maker according to claim 1.

The motor unit may include one or more of an arrangement in which a motor shaft is extended in the opposite direction of a connection shaft of the output unit and an arrangement in which the motor shaft is eccentrically located with respect to the body of the motor unit.

In a section where the first output unit is rotated in engagement with the corresponding gear, the ice tray may be rotated at a higher speed than in a section where the second output unit is rotated in engagement with the corresponding gear. In the section where the second output unit may be rotated in engagement with the corresponding gear, the ice tray is rotated at a higher torque than in the section where the first output unit is rotated in engagement with the corresponding gear.

The one side of the ice tray may be rotated when the first and second output units are rotated in engagement with the respective gears, and the other side of the ice tray may be rotated when only the first output unit is rotated in engagement with the corresponding gear.

Among the plurality gears of the gear group, gears engaged with the output unit may have a free rotation section in which the gears are freely rotated before and after the gears are engaged with the output unit in different rotation sections.

Among gear teeth of the second output unit, gear teeth positioned in a start section where the engagement of the first output unit is switched to the engagement of the second output unit may have a smaller height than the other gear teeth.

The gear group may include: a first gear part formed on a connection part installed at one side of the ice tray, rotated by a predetermined length through a rotational force based on the signal, and formed along the rotation direction of the connection part; and a second gear part installed on a motor shaft of the motor unit, formed at a position corresponding to the first gear part, and rotated in engagement with the first gear part. The first gear part may include a plurality of gears which are formed at different radiuses from the rotation center of the connection part rotated by the rotational force, and have rotation sections separated from each other, and the second gear part may include a plurality of gears corresponding to the respective gears of the first gear part.

The gear group may further include a third gear part positioned between the first and second gear parts so as to transfer the rotational force to the first gear part, and including a first middle gear engaged with the first gear part and a second middle gear engaged with the second gear part. The first and second middle gears of the third gear part may be disposed to compensate for different rotation directions of the first and second gear parts, and the rotation centers of the first and second middle gears may be positioned on the same axis

The plurality of gears formed on the connection part may include first and second engagement gears. Sections in which the first and second engagement gears are formed may have different lengths, and the first engagement gear which is engaged with the motor shaft later than the second engagement gear may have a shorter length than the second engagement gear.

The plurality of gears formed on the connection part may include first and second engagement gears, the first engagement gear formed at a larger radius distance than the second engagement gear on the connection part may be engaged with the motor shaft later than the second engagement gear, and a difference between the radius distances may form a section in which the rotation of the connection part is changed from high speed to low speed.

The different rotational speeds of the connection part may be decided according to one or more of a rotational speed of the motor shaft and a gear ratio of the middle gear.

When the ice tray is close to a stopper located at one side of the ice maker, the rotation of the motor unit may be pulse-controlled to increase a torque of the ice tray.

The driving unit may include: a drive configured to convert the electrical signal received from the signal receiving unit into rotation information; and the motor unit configured to receive the rotation information from the drive and rotate in response to the rotation information.

The ice maker performs transmission/reception with the refrigerator controller through a plurality of communication lines. During the reception operation, the ice maker may receive the signal from a cross output unit that selectively cross-transmits or non-cross-transmits the signal through the plurality of lines.

The signal may include a pulse signal or digital signal, and the rotation information may be decided through direction information contained in the signal transmitted by the cross output unit.

The controller may receive a control waveform to control the driving unit.

In another general aspect, a refrigerator includes: a refrigerator controller positioned in the refrigerator; a signal transmitting unit included in the refrigerator controller, and transmitting a signal; a cross output unit included in the refrigerator controller, and transmitting the electrical signal received from the signal transmitting unit through a plurality of lines, wherein the cross output unit selectively cross-transmits or non-cross-transmits the electrical signal through the plurality of lines according to control of the refrigerator control unit; and an ice maker according to claim 1. The ice maker may include: a signal receiving unit receiving the electrical signal transmitted from the cross output unit; a driving unit comprising: a drive configured to convert the electrical signal received from the signal receiving unit into rotation information; and a motor unit configured to receive the rotation information from the drive and rotate in response to the rotation information; and an ice tray connected to the motor unit, rotated by the rotation of the motor unit, disposed in sub-zero temperatures in the refrigerator, and having water contained therein to make ice

The motor unit may include a stepping motor, and the rotation information comprises one or more of a rotational speed, a rotation direction, a rotation angle and a torque.

### [Advantageous Effects]

According to the embodiments of the present invention, it is possible to provide an ice maker which can divide a rotation section of an ice tray rotated by a motor into a high-speed/low-torque section and a low-speed/high-torque section such that a force of the motor can be efficiently used for ice separation.

Furthermore, it is possible to provide an ice maker which can divide a rotation section of an ice tray rotated by a motor, and form a predetermined coupling section of two gears such that a force of the motor can be efficiently used for ice separation through the coupling of the two gears.

Moreover, it is possible to provide a refrigerator including an ice maker which can divide a rotation section of an ice tray rotated by a motor into a high-speed/low-torque section and a low-speed/high-torque section such that a force of the motor can be efficiently used for ice separation.

In addition, it is possible to provide a refrigerator including an ice maker which can divide a rotation section of an ice tray rotated by a motor, and form a predetermined coupling section of two gears such that a force of the motor can be efficiently used for ice separation through the coupling of the two gears.

Furthermore, it is possible to provide an ice maker capable of preventing contamination which may be caused by a motor.

Moreover, it is possible to provide an ice maker including a motor having a semi-permanent lifetime.

In addition, it is possible to provide an ice maker capable of reducing heat generated from a motor.

Furthermore, it is possible to provide an ice maker having low noise and vibration.

Moreover, it is possible to provide an ice maker capable of freely controlling a motor.

### [Description of Drawings]

FIG. 1 is a cross-sectional view of an ice maker according to an embodiment of the present invention.
FIG. 2 is a perspective view illustrating that an ice tray of the ice maker according to the embodiment of the present invention is twisted.
FIG. 3 is a perspective view illustrating an arrangement structure of a gear group according to the embodiment of the present invention.
FIG. 4 is a plan view illustrating the arrangement structure of the gear group according to the embodiment of the present invention.
FIG. 5 is a side view illustrating an arrangement structure of the gear group according to the embodiment of the present invention.
FIG. 6 is a plan view illustrating the structure of a second gear according to the embodiment of the present invention.
FIGS. 7A and 7B are side and plan views illustrating that a connection part of the ice tray is rotated by a motor unit according to the embodiment of the present invention.
FIG. 8 is a perspective views illustrating that the connection part of the ice tray is rotated by the motor unit according to another not claimed example.
FIG. 9 is a side and plan view illustrating that the connection portion of the ice tray is rotated by the motor unit according to still another not claimed example.
FIG. 10 illustrates a rotation range of the ice tray according to the embodiment of the present invention.
FIGS. 11 and 12 are diagrams for describing an operation of an ice maker according to a not claimed example.
FIGS. 13 and 14 are diagrams for describing an operation of an ice maker according to a not claimed example.
FIGS. 15 and 16 are diagrams for describing an operation of an ice maker according to a not claimed example.

### [Best Mode]

Hereafter, specific embodiments of the present invention will be described with reference to the accompanying drawings. However, the embodiments are only exemplary embodiments, and the present invention is not limited thereto.

While the embodiments of the present invention are described, detailed descriptions related to well-known functions or configurations will be ruled out in order not to unnecessarily obscure subject matters of the present invention. The terms used herein are defined in consideration of their functions in the embodiments of the present invention, and may differ depending on the custom or intention of a user or operator. Therefore, the definitions should be based on the overall contents of this specification.

The technical idea of the present invention is decided by claims, and the following embodiments are used only to efficiently describe the technical idea to those skilled in the art to which the present invention pertains.

The following embodiments may include one or more of a control unit, a signal transmitting unit, a cross output unit, a signal receiving unit and a driving unit. Since the above components can subsidiarily operate in order to realize the technical idea of the present invention, the components are not illustrated. However, the components will be simply described before the present invention is described in detail later.

Among the components, the control unit, the signal transmitting unit and the cross output unit may be located in a refrigerator, and the signal receiving unit and the driving unit may be included in an ice maker 10. Since the components to transmit a signal according to control of the control unit, that is, the signal transmitting unit and the cross output unit are located in the refrigerator, the ice maker may receive a signal from the refrigerator.

Hereafter, various embodiments will be described in detail, but embodiments including one or more of the control unit, the signal transmitting unit, the cross output unit, the signal receiving unit and the driving unit will be described later. Among the components, the control unit, the signal transmitting unit and the cross output unit may be located in the refrigerator, and the signal receiving unit and the driving unit may be included in the ice maker. Since the components to transmit a signal according to control of the control unit, that is, the signal transmitting unit and the cross output unit are located in the refrigerator, the ice maker may receive a signal from the refrigerator.

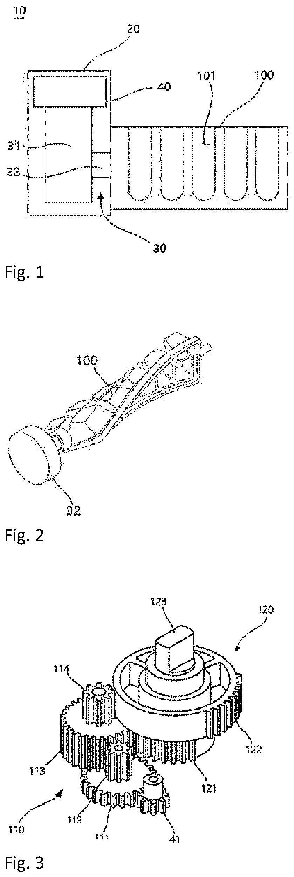

FIG. 1 is a cross-sectional view of an ice maker 10 according to an embodiment of the present invention.

Referring to FIG. 1, the ice maker 10 may be disposed in a space having a freezing temperature in a refrigerator. The ice maker 10 may include a driving unit 20 and an ice tray 100.

The ice tray 100 may include a container 101 for containing water therein. The ice tray 100 may have a plurality of barriers formed therein to separate the container 101 into a plurality of spaces. The ice tray 100 may include a temperature sensor (not illustrated) to measure the temperature of water. Furthermore, the ice tray may further include a capacitance sensor (not illustrated) to sense the amount of water contained in the container 101.

The ice tray 100 may be formed of resin. The ice tray 100 may be twisted by rotation of a gear group 30, and then restored to the original shape.

The gear group 30 may be installed at one side of the ice tray 100. The gear group 30 may twist the ice tray 100 in order to separate ice formed in the ice tray 100. For this operation, the gear group 30 may include components for rotating the ice tray 100.

The gear group 30 includes a plurality of gears and an output unit 120 connected to the ice tray 100. The plurality gears for changing a rotational force transferred from a motor unit 40 are engaged with the output unit 120, and then rotated by a predetermined section. The motor unit 40 may include a geared stepping motor. The geared stepping motor may be rotated by a predetermined angle whenever a pulse signal is applied, and have a rotation angle which is proportional to the number of input pulses. Therefore, the input pulses may be controlled in order to correctly adjust the rotation angle of the motor while performing the speed change.

When the motor unit 40 is a brush motor, the lifetime of the brush motor formed of carbon may be limited, and the inside of the refrigerator around the motor may be contaminated by carbon dust caused from a carbon brush. Furthermore, the brush motor may generate severe noise and vibration, and consume a large amount of current in operation. Moreover, since the brush motor generates a considerable amount of heat, energy consumption may be significantly increased. On the other hand, the stepping motor consumes a small amount of current and generates low noise and vibration in operation. Furthermore, since heat generated through the operation of the stepping motor has low temperature, the energy efficiency may be improved. Moreover, since the stepping motor has no carbon brush, the refrigerator may not be contaminated by carbon dust. In addition, the stepping motor may have a semi-permanent lifetime, because the stepping motor does not wear out.

The ice maker 10 may include a position sensor (not illustrated) for sensing an angular position of the ice tray 100 by the motor unit 40. The angular position may include the positions of both ends of the ice tray 100.

The gear group 30 may lower the rotational speed of rotation performed by the motor unit 40, and raise the torque of the rotation. On the other hand, the gear group 30 may raise the rotational speed, and lower the torque. The gear group 30 may be connected to an ice full sensing lever (not illustrated), and not only twist the ice tray 100, but also measure the amount of ice which is made by the ice maker 10 and stored in an ice container (not illustrated).

The driving unit 20 may house the motor unit 40 and the gear group 30 therein, and have a through-hole (not illustrated) through which an output gear 130 can be connected to the ice tray 100. Furthermore, one or more of a light emitting unit and a receiving unit may be positioned at one side of the driving unit 20, in order to sense whether the ice container positioned under the driving unit 20 is full of ice. That is, the light emitting unit and/or the light receiving unit positioned at the one side of the driving unit 20 may sense whether the ice container is full of ice, depending on how much light is reflected from the ice.

The ice tray 100 may be twisted by a rotational force generated through the driving unit 20. At this time, one side of the ice tray 100 may be rotated by a predetermined angular distance and then stopped, and the other side of the ice tray 100 may be rotated by a larger angular distance than the predetermined angular distance. Since both sides of the ice tray 100 are rotated by different angular distances, the ice tray 100 can be twisted.

A motor controller (not illustrated) for controlling the motor unit 40 may be located in the ice maker 10 or the refrigerator. When the motor controller is located in the ice maker 10, the motor controller may be located on a printed circuit board (not illustrated) disposed at one side of the motor unit 40. Since the motor unit 40 is a stepping motor, the motor controller may receive a control waveform to control the motor unit 40. Furthermore, a position signal by a driving waveform of the motor unit 40 may be supplied to the motor controller. Through this operation, the motor controller may correctly control the angular position of the motor unit 40. The motor controller may include a driver that generates a pulse signal for driving the motor unit 40.

The stepping motor serving as the motor unit 40 can rotate in the forward and reverse directions. Therefore, the ice tray 100 can be twisted and then returned to the original position only by the motor unit 40. However, the present invention is not limited thereto. In another embodiment, the ice tray 100 may be twisted by the motor unit 40, and returned to the original position by an elastic member (not illustrated) mounted at one side of the ice tray 100.

Furthermore, the ice maker 10 may further include the signal transmitting unit, the cross output unit, the signal receiving unit and a drive, in relation to control. Specifically, the signal transmitting unit included in the refrigerator may transmit an electrical signal such that the driving unit 20 is driven according to information contained in the electrical signal. The electrical signal transmitted from the signal transmitting unit may be transferred to the signal receiving unit by the cross output unit. The transfer direction may decide operation information of the driving unit to which the electrical signal is to be finally transferred.

Moreover, the information contained in the electrical signal received from the refrigerator may be transferred at different pps (pulse per second) settings when the electrical signal is transferred in a pulse form, and each pps setting may include specific information. For example, when the electrical signal is transferred at 180pps, the driving unit may be driven in the forward direction, and when the electrical signal is transferred at 500pps, the driving unit may be driven in the reverse direction. The information may contain a rotation angle and torque as well as the information related to the rotation direction.

When the electrical signal is a digital signal composed of 0's, 1's and -1's, the rotational speed, the rotation direction, the rotation angle and the torque may be set according to a combination result of signals transferred to a plurality of signal lines. That is, the electrical signal may be transferred as a bipolar signal. Alternatively, the electrical signal may also be transferred as a unipolar signal. For example, when the electrical signal is a digital signal of 1's and 0's, the rotational speed, the rotation direction, the rotation angle and the torque may be set according to a combination result of signals transferred to the plurality of signal lines. That is, one or more of the bipolar signal and the unipolar signal may be applied as the electrical signal.

The electrical signal transmitted from the cross output unit included in the refrigerator may be received through the signal receiving unit, and transferred to the driving unit. The driving unit may be driven in response to the electrical signal transferred thereto. The driving unit may include the drive and the motor unit. The drive may transfer information to drive the motor unit 40, and generate rotation information to rotate the motor unit 40. At this time, the generation may indicate a process of analyzing the information contained in the received electrical signal. The generation may be performed according to predefined rules, and the predefined rules may correspond to the contents of the information contained in the electrical signal.

When the drive produces the rotation information for rotating the motor unit 40, the drive may transfer the rotation information to the motor unit 40, and the motor unit 40 may be driven in response to the rotation information. At this time, power for rotating the motor unit 40 may be supplied through a separate power line from outside. For example, a voltage for transmitting the electrical signal may be set to 5V, and a voltage for driving the motor unit 40 may be set to 12V. The power line may be connected to the driving unit in order to transfer power. That is, the power may be connected and transferred to the drive or the motor unit 40.

The transferred power may rotate the motor unit 40, and rotate one side of the ice tray 100 connected to a shaft of the driving unit 20. The one side of the ice tray 100 may be connected to the motor unit 40 and rotated across the entire section with the motor unit 40 through the rotation of the motor unit 40, and the other side of the ice tray 100 may be rotated only by a predetermined section with the motor unit 40 until the other side is locked to a stopper (not illustrated). The predetermined section may correspond to a smaller range than the entire section. When the other side of the ice tray 100 is rotated up to the predetermined section, only the one side of the ice tray 100 may be rotated to twist the ice tray 100. The ice tray 100 may be disposed in sub-zero temperatures while containing water therein. Thus, when the water is changed to ice, the ice tray 100 may be twisted to separate the ice.

When the ice tray 100 is twisted to separate the ice, the motor unit 40 may be driven to twist the ice tray 100. At this time, the drive may produce rotation information based on the electrical signal, and transfer the rotation information to drive the motor unit 40. That is, in the present embodiment, the electrical signal may be set to the rotation information by a selective transmission of the cross output unit, in order to separate ice.

The present invention is not limited thereto, but a part of the components may be excluded. In this case, the electrical signal and the rotation information may be transmitted in different manners, in order to rotate the motor unit 40.

FIG. 2 is a perspective view illustrating that the ice tray 100 of the ice maker according to the embodiment of the present invention is twisted.

Referring to FIG. 2, the motor unit 40 may be connected to one side of the ice tray 100 so as to transfer a rotational force. The rotational force may be not transferred to both sides of the ice tray 100, but transferred to only the one side of the ice tray 100. For example, when the rotational force is transferred in the forward direction, the ice tray 100 may be rotated in the forward direction. However, the forward rotation direction may be divided into a plurality of sections, such that both ends of the ice tray 100 are rotated together at a part of the entire sections, but only the one side of the ice tray 100, connected to the motor unit 40, is rotated at the other part of the entire sections. The other side of the ice tray 100, corresponding to the opposite side of the one side, may be rotated up to a preset rotation angle until the other side is stopped by the stopper (not illustrated). At this time, however, since the rotational force is continuously transferred to the one side of the ice tray 100 by the motor unit 40, the one side of the ice tray 100 can be rotated.

Therefore, the ice tray 100 can be twisted. When the water contained in the ice tray 100 is changed to ice at sub-zero temperatures, the ice may stick to the container of the ice tray 100. At this time, the twisting operation may be performed to separate the ice.

The twisting operation for the ice tray 100 may be performed after the ice tray 100 is rotated at a predetermined rotation angle, such that the ice can move in the direction of gravity. That is, the predetermined rotation angle may correspond to the section in which both ends of the ice tray 100 are rotated together, and a rotation angle from a point at which the twisting operation is started to a point at which the twisting operation is ended may correspond to the section in which only the one side of the ice tray 100 is rotated.

Hereafter, various embodiments for twisting the ice tray 100 will be described. Although not described later, the various embodiments can be modified in various manners by changing a gear ratio, rotational speed or supplied power.

FIG. 3 is a perspective view illustrating an arrangement structure of the gear group 30 according to the embodiment of the present invention.

Referring to FIG. 3, the gear group 30 includes a first gear 212, a second gear 211 and an output unit 120. In the present embodiment, the gear group 30 includes the three variable speed components.

Specifically, the first gear 212 may include a first-first gear 111 and a first-second gear 112. The first-first gear 111 may be included in the gear group 30 to which a rotational force of the motor unit 40 is first transferred, and form a larger pitch circle than the first-second gear 112. Since the first-first gear 111 and the first-second gear 112 have the same axis of rotation, the rotational speed may be reduced while the rotational force of the motor unit 40, transferred to the first-first gear 111, is transferred to the first-second gear 112.

The rotational force transferred to a second-first gear 113 of the second gear 211 may be transferred to the output unit 120. At this time, the output unit 120 may be rotated by a first output shaft 121 coupled to the second-first gear 113. The second gear 211 may include the second-first gear 113 and a second-second gear 114. The second-second gear 114 forms a smaller pitch circle than the second-first gear 113, and the second-first gear 113 and the second-second gear 114 have the same axis of rotation.

The first output shaft 121 has gear teeth which are not formed in the 360 degree direction around the rotation center of the output unit 120, but formed only at a predetermined section. Therefore, the output unit 120 can be rotated by the predetermined section of the rotation section of the output unit 120 through an engagement between the second-first gear 113 and the first output shaft 121.

After the output unit 120 is rotated by the predetermined section through the engagement between the first output shaft 121 and the second-first gear 113, the output unit 120 may be rotated through an engagement between the second-second gear 114 and a second output shaft 122 included in the output unit 120.

As described above, the second-first gear 113 and the second-second gear 114 which are included in the second gear 211 have the same axis of rotation, but form different pitch circles. Thus, the rotational speed and torque of the output unit 120 rotated in engagement with the second-first gear 113 and the second-second gear 114 of the second gear 211 differ at each of the rotation sections.

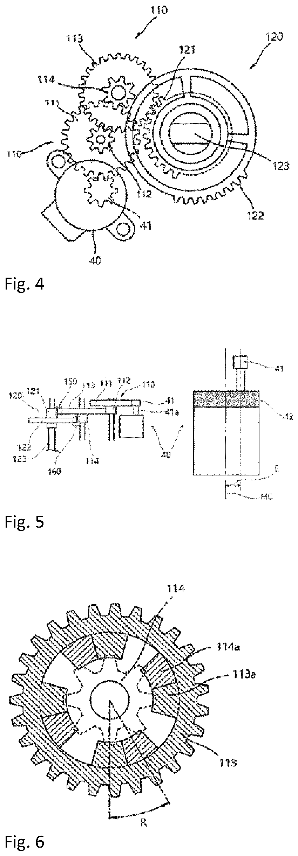

Referring to FIG. 4, the structure will be described in detail as follows.

FIG. 4 is a plan view illustrating an arrangement structure of the gear group 30 according to the embodiment of the present invention.

Referring to FIG. 4, the rotational speed, rotation range (rotation angle) and torque of the ice tray 100 may be controlled through an engagement between the output unit 120 and the second gear 211. When the rotational force generated from the motor unit 40 is transferred to the first gear 212, the number of rotations may be decreased through gear shifting. Then, when the rotational force is transferred to the second gear 211, the torque may be increased. The decrease of the rotation number and the increase of the torque may be inversely proportional to each other, under the supposition that the rotational force transferred from the motor unit 40 is constantly maintained. Thus, the respective values of the rotation number and the torque may be increased or decreased.

As described above, the rotational force may be changed due to a factor such as a supply signal or power supply. However, the following embodiments will be based on the supposition that the constant rotational force is provided, in order to describe the gear ratio and the structure of the gear group 30.

The gear group 30 may receive the rotational force from a pinion 12 installed on a motor shaft 41a of FIG. 5, and rotate the first and second gears 212 and 212 at the same number of rotations. The first and second gears 212 and 212 can be rotated in the forward and reverse directions, and the rotations can be controlled through the motor unit 40 which is rotated by the control unit.

While the first and second gears 212 and 211 of the gear group 30 are rotated at the same speed, the rotational speed of the output unit 120 may be changed depending on the rotation sections. In order to implement such a configuration, the first and second output shafts 121 and 122 included in the output unit 120 may be engaged and rotated with the second-second gear 114 and the second-first gear 113 of the second gear 211, and the output unit 120 may have gear teeth formed along a part of a pitch circle.

Specifically, the gear teeth may be formed on both of the first and second output shafts 121 and 122, but formed on predetermined parts of the first and second output shafts 121 and 122, and each of the predetermined parts may correspond to a preset angle based on the rotation center of the output unit 120. The angle at which the gear teeth of the first output shaft 121 are formed and the angle at which the gear teeth of the second output shaft 122 are formed may be set so as not to overlap each other.

When the first output shaft 121 is rotated in engagement with the second-second gear 114 by the angle at which the gear teeth of the first output shaft 121 are formed, the rotation may be considered as a high-speed rotation. On the other hand, when the second output shaft 122 is rotated in engagement with the second-first gear 113 by the angle at which the gear teeth of the first output shaft 121 are formed, the rotation may be considered as a high-torque rotation.

The high-speed rotation and the high-torque rotation may indicate that the speed and torque are relatively increased when the first and second output shafts 121 and 122 are rotated in engagement with the gear group 30.

Furthermore, the second gear 211 rotated in engagement with the output unit 120 in the gear group 30 may have a free rotation section in which the second gear 211 is freely rotated before and after the second gear 211 is engaged with the output unit 120. That is, since the engagement with the output unit 120 having the gear teeth formed at the predetermined section is performed according to the predetermined section, the second-first gear 113 and the second-second gear 114 may have a free rotation section in which they are not engaged with the first and second output shafts 121 and 122, but freely rotated.

Moreover, the different modules may form a rotation section in which the torque of the engaged output unit 120 is lowered while the rotational speed thereof is raised.

The first output shaft 121 may further include a mark portion (not illustrated) capable of indicating that the first output shaft 121 is switched to a waiting state for rotation from the engagement state. That is, the mark portion may indicate a starting point. The mark portion may be set to a specific gear tooth having a different color from adjacent gear teeth, or indicated by a gradation formed on the gear tooth. Therefore, according to the position of the mark portion (not illustrated), an operator can check that the first output shaft 121 is positioned at the starting point.

Among the gear teeth of the second output shaft 122, gear teeth located at a start section where the engagement with the first output shaft 121 is switched to the engagement with the second output shaft 122 may have a smaller height than the other gear teeth. The start section may indicate a section where an interference may occur between a gear tooth of the second-first gear 113 and a gear tooth of the second output shaft 122 during the engagement with the second-first gear 113, and range from 0% to 50% of the section in which the whole gear teeth of the second output shaft 122 are formed.

Furthermore, since the high-speed rotation and the high-torque rotation of the output unit 120 can rotate the ice tray 100 connected to an output shaft 123, the ice tray 100 can be rotated at a high speed or high torque. This configuration will be described in more detail with reference to FIG. 5.

FIG. 5 is a side view illustrating an arrangement structure of the gear group 30 according to the embodiment of the present invention.

Referring to FIG. 5, the motor unit 40 may include a motor shaft 41a extended in one direction from the main body thereof, and the pinion 12 may be installed on the extended motor shaft 41a. The gear group 30 rotated in engagement with the pinion 12 may be connected to the ice tray 100 through the output shaft 123. The extension direction of the output shaft 123 connected to the ice tray 100 may correspond to the opposite direction of the direction that the motor shaft 41a is extended from the body of the motor unit 40. When the gear group 30 and the motor unit 40 located in the driving unit 20 have the above-described arrangement structure, the volume of the driving unit 20 may be reduced.

Furthermore, in order to reduce the volume of the control box, a geared motor may be employed as the motor unit 40. The employment of the geared motor may form a distance of eccentricity E between the rotation center MC of a rotor embedded in the motor unit 40 and the motor shaft 41a extended from the body of the motor unit 40. Due to the distance of eccentricity E, the body of the motor unit 40 can be disposed more adjacent to the inside of the driving unit 20. That is, since the motor unit 40 is disposed more adjacent to the inside of the driving unit 20 due to the distance of eccentricity E between the rotation center MC of the rotor and the center of the motor shaft 41a, the size of the driving unit 20 can be reduced.

FIG. 6 is a plan view illustrating the structure of the second gear 211 according to the embodiment of the present invention.

Referring to FIG. 6, the second gear 211 rotated in engagement with the output unit 120 may be operated by engagements between the second-first gear 113 and the second-second gear 114 and the output unit 120. The operation may indicate that the second gear 211 is moved with an angle difference between the second-first gear 113 and the second-second gear 114, the angle difference corresponding to a rotation angle R. The rotation angle R may indicate a rotation range capable of compensating for a difference in rotational speed between the second-first gear 113 and the second-second gear 114. For example, the rotation angle R may be set to 20 degrees.

Since the first and second output shafts 121 and 122 are engaged with different modules, a rotational speed difference may occur. Furthermore, a speed difference may occur the moment that the transfer path of the rotational force is switched from the first output shaft 121 to the second output shaft 122. Therefore, if the rotation angle R is not formed, the gear rotation may be stopped.

Therefore, the rotation angle R needs to be formed in order to compensate for the rotational speed difference between the gears. For this structure, the second-second gear 114 may be coupled to the inside of the second-first gear 113 such that a slide part can be rotated in a guide part.

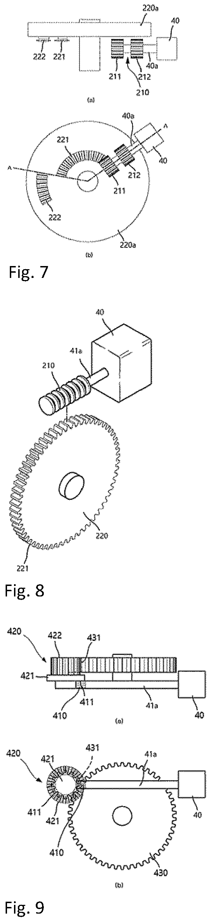

FIGS. 7A and 7B are side and plan views illustrating that a connection part 210 of the ice tray 100 is rotated by the motor unit 40 according to the embodiment of the present invention.

In the present embodiment, first and second gear parts may be defined as gears formed at the connection part 210 and gears formed at the motor shaft 40a of the motor unit 40, respectively. Specifically, the first gear part includes first and second engagement gears 222 and 221, and the second gear part includes the first and second gears 212 and 211.

Referring to FIGS. 7A and 7B, the ice maker according to the present embodiment may include the connection part 220a installed at one side of the ice tray 100 and the motor unit 40 rotated in engagement with the connection part 220a. Specifically, the connection part 220a may have gears formed on a surface thereof, which is connected to the motor unit 40. The connection part 220a may be rotated through an engagement of the gears. The gears may be formed in the circumferential direction, while being located at different radiuses based on a rotating shaft of the connection part 220a. For example, the first and second engagement gears 222 and 221 may be formed.

As described above, the first and second engagement gears 222 and 221 may be located at different radiuses. Furthermore, the first and second engagement gears 222 and 221 may have different formation angles in the circumferential direction. Specifically, the first and second engagement gears 222 and 221 may be formed so as not to overlap each other in the rotation direction. Such a structure is in order to avoid a state in which the first and second gears 212 and 211 are engaged with the first and second engagement gears 222 and 221, respectively, at the same time. When the first and second gears 212 and 211 are engaged with the first and second engagement gears 222 and 221 at the same time, the rotation may be resisted because the first and second engagement gears 222 and 221 located at different radiuses have different rotational speeds.

The motor shaft 40a may be extended from the motor unit 40 in order to transfer a rotational force, and the first and second gears 212 and 211 may be formed on the outer circumferential surface of the motor shaft 40a. The first and second gears 212 and 211 may be positioned on the motor shaft 40a so as to be engaged with the first and second engagement gears 222 and 221, respectively.

The rotational force generated by the motor unit 40 may be transferred through an engagement between the second gear 211 and the second engagement gear 221. The angle at which the connection part 220a is rotated by the transfer of the rotational force may be set according to the length of the second engagement gear 221. As described with reference to FIG. 2, the rotation angle which is set according to the length of the second engagement gear 221 may correspond to the rotation section in which both ends of the ice tray 100 are rotated together. Thus, the ice tray 100 may not be twisted in this section.

After the formation section of the second engagement gear 221 in which the second gear 211 and the second engagement gear 221 are engaged with each other, the first gear 212 and the first engagement gear 222 may be engaged with each other. At this time, although the motor unit 40 is rotated at the same speed, the rotational speed may be decreased and the torque may be increased, compared to the rotation performed through the engagement between the second gear 211 and the second engagement gear 221. That is, the rotation through the engagement between the first gear 212 and the first engagement gear 222 may be aimed at twisting the ice tray 100. The rotational speed and the torque may be changed depending on power supplied to the motor unit 40, but also be changed depending on the radiuses of the engagement gears 222 and 221 on the connection part 220a. For example, when the radius is doubled, the torque may be doubled, but the speed may be halved. On the other hand, when the radius is halved, the torque may be halved, and the speed may be doubled.

Therefore, for the ice separation section in which a high torque is required to twist the ice tray 100, the first gear 212 and the first engagement gear 222 may be engaged and rotated. On the other hand, for the rotation section before the ice is separated, the second gear 211 and the second engagement gear 221 may be engaged and rotated. The rotation section will be described in more detail later.

FIG. 8 is a perspective views illustrating that a connection part 220 of the ice tray 100 is rotated by a motor unit 40 according to a not claimed example.

In the present example, first and second gear parts may indicate a gear formed at the connection part 220 and a gear formed at the motor shaft 40a of the motor unit 40, respectively. Specifically, the first gear part includes a worm gear 221, and the second gear part includes a worm wheel 210.

Referring to FIG. 8, the ice maker according to this example may include the connection part 220 installed at one side of the ice tray 100 and the motor unit 40 connected to the connection part 220. Specifically, the connection part 220 may have a gear formed on a surface connected to the motor unit 40. The gear may be set to the worm wheel 321, and rotated about the rotating shaft of the connection part 220.

The worm wheel 321 may be engaged with the worm gear 310 formed on the outer circumferential surface of the motor shaft 40a extended from the motor unit 40. That is, since the worm gear 310 is engaged with the worm wheel 321 formed on the connection part 220, the rotational speed of the worm gear 130a to provide a rotational force may be increased or decreased in proportion to the rotational speed of the connection part 220.

At this time, power may be adjusted in order to control the rotational speed of the worm gear 310. For example, when power is supplied on a pulse basis, the power may be changed depending on the number of pulses. When the rotational speed of the connection part 220 is preferentially considered, the power may be supplied at 500pps. On the other hand, when the torque is preferentially considered, the power may be supplied at 400pps. When the number of pulses is lowered, it may indicate that the number of rotations can be lowered, but a higher torque can be transferred. Thus, when the ice tray 100 is rotated up to the angle at which ice can drop from the ice tray 100 in the direction of gravity, the power may be supplied at 500pps. When the ice tray 100 is twisted to separate ice from the ice tray 100, the power may be supplied at 400pps. Such a power difference may not be limited to the above-described case, but set by a person skilled in the art in consideration of the rotational speed and torque.

FIGS. 9A and 9B are side and plan views illustrating that a connection part 430 of the ice tray 100 is rotated by the motor unit 40 according to still another not claimed example.

In the present example, first and second gear parts may indicate a gear formed at the connection part 430 and a gear formed at the motor shaft 40a of the motor unit 40, respectively. The ice tray 100 according to the present example may further include a third gear part. In the present example, a middle gear 420 including first and second middle gears 422 and 421 may be defined as the third gear part. Specifically, the first gear part may include a small gear 410, and the second gear part may include a gear formed on the outer circumferential surface of the connection part 430. The third gear part may include the first middle gear 422 engaged with the small gear 410 and the second middle gear 421 engaged with the connection part 430.

Referring to FIG. 9, the ice maker according to the present example may include the connection part 430 installed at one side of the ice tray 100, the motor unit 40 connected to the connection part 430, and the middle gear 420 disposed between the motor unit 40 and the connection part 430 so as to transfer a rotational force of the motor unit 40 to the connection part 430. Specifically, the middle gear 420 may include first and second middle gears 422 and 421. The first middle gear 422 may be engaged with the connection part 210, and the second middle gear 421 may be engaged with the small gear 170 of the motor unit 40. The small gear 410 may be formed at an end of the motor shaft 40a of the motor unit 40.

The direction of the rotational force from the motor unit 40 may be switched in order to transfer the rotational force. In order to switch the direction of the power, the direction of gear teeth formed on the middle gear 422 may be different from the direction of gear teeth formed on the middle gear 421.

When the motor unit 40 is located in a control box (not illustrated), the arrangement of the motor unit 40 and the ice tray 100 may be changed in order to reduce the volume of the ice maker 10. In this case, the transfer direction of the rotational force by the middle gear 420 may be changed in a different manner from the example of FIG. 9.

Furthermore, the middle gear 420 may decide a gear ratio between the rotational speed of the motor shaft 40a and the rotational speed of the connection part 430, depending on the position of a first connection part 431 through which the first middle gear 422 and the connection part 430 are engaged with each other and the position of a second connection part 411 through which the second middle gear 421 and the small gear 410 are engaged with each other. The gear ratio may be decided according to distances to the positions of the first and second connection parts 431 and 411 from the rotation center of the middle gear 420.

Furthermore, when the gear ratio is decided by the middle gear 420, the rotational speed may be changed by power supplied to the motor unit 40. For example, when power is supplied on a pulse basis, the power may be changed depending on the number of pulses. When the rotational speed of the connection part 430 is preferentially considered, the power may be supplied at 500pps. On the other hand, when the torque is preferentially considered, the power may be supplied at 400pps. When the number of pulses is lowered, it may indicate that the number of rotations can be lowered, but a higher torque can be transferred. Thus, when the ice tray 100 is rotated up to the angle at which ice can drop from the ice tray 100 in the direction of gravity, the power may be supplied at 500pps. When the ice tray 100 is twisted to separate ice from the ice tray 100, the power may be supplied at 400pps. Such a power difference may not be limited to the above-described case, but set by a person skilled in the art in consideration of the rotational speed and torque.

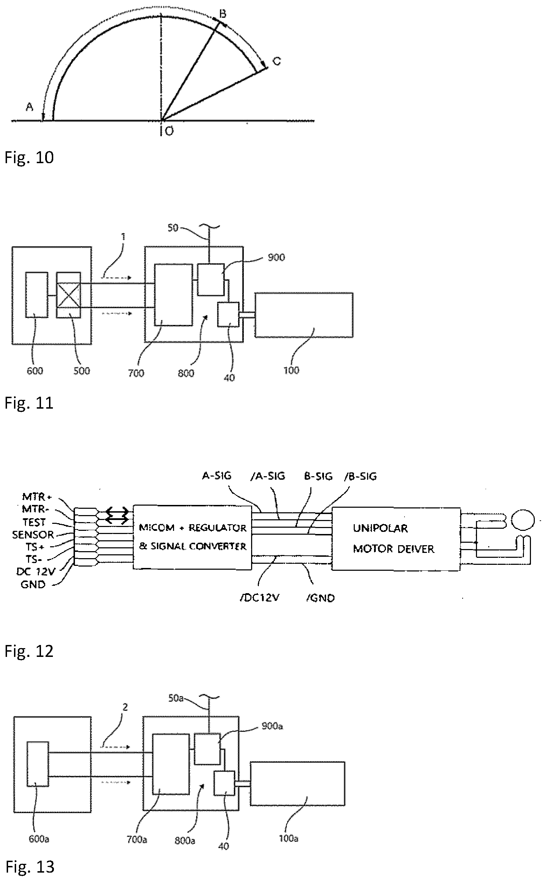

FIG. 10 illustrates a rotation range of the ice tray 100 according to the embodiments of the present invention.

Referring to FIG. 10, the rotation range of the ice tray 100 based on the rotation of the output unit 120 will be described in detail.

Both sides of the ice tray 100 may be rotated, and the rotation may be divided into first to third sections. Hereafter, the first to third sections will be referred to as an A-B section, B-C section and C-A section, respectively.

FIG. 10 illustrates an example of the rotation range of the ice tray 100 rotated by the output unit 120 included in the above-described embodiments. While water is supplied to the ice tray 100 and changed to ice in a sub-zero temperature environment, an ice making process may be performed. In the present embodiments, the ice tray 100 may be twisted to separate the ice.

The ice separation may be performed through forward and reverse rotations of the motor unit 40. Specifically, when the ice tray 100 is rotated 160 degrees in the forward direction by the motor unit 40, the ice tray 100 may be rotated 160 degrees in the reverse direction and returned to the original position. At this time, the reverse rotation may be referred to as a process for returning the ice tray 100 to the original position, and the forward rotation may be referred to as a process for separating ice. The forward rotation may be divided into the A-B section and the B-C section. The angle of 160 degrees is only an example, and may be set in the range of 180 degrees or less. At this time, a process of rotating the ice tray 100 in the forward direction up to the rotation range and then rotating the ice tray in the reverse direction may be set to one cycle.

For example, in the A-B section (forward rotation section) and the C-A (reverse rotation section), the ice tray 100 may be rotated at 1RPM, and the torque may be set to 10kgfcm. Furthermore, in the B-C section (forward rotation section), the ice tray 100 may be rotated at 0.25 RPM, and the torque may be set to 40kgfcm. Moreover, a time required for performing one cycle may differ depending on the range of the A-C section. For example, the time may range from 90 to 120 seconds. When the time is changed depending on the rotational speed, the rotational speed may be changed depending on the above-described factors.

In particular, the B-C section for twisting the ice tray 100 to separate ice may have a different gear ratio from the A-B section and the C-A section in which the ice tray 100 is rotated at high speed. For example, the gear ratio of the B-C section may be 1.5 to 4.7 times higher than the gear ratio of the A-B section and the C-A section.

In FIG. 10, the ice tray 100 may be rotated by the A-B section (first section) about the rotation center O of the ice tray 100. The rotation may correspond to a high-speed rotation by the first output shaft. During the high-speed rotation, the ice tray 100 may not be twisted, but both ends of the ice tray 100 or specifically one side and the other side of the ice tray 100, connected to the output unit 120, may be rotated by the same angle. Therefore, the A-B section may correspond to the angle at which ice can drop from the ice tray 100 in the direction of gravity. For example, the A-B section may be set to 90 degrees or more or specifically 120 degrees. Moreover, when the one side of the ice tray 100 connected to the output shaft 123 is rotated from the B point to the C point by the rotation of the output unit 120, the movement of the other side of the ice tray 100 may be restricted by a stopper (not illustrated). That is, the rotational force transferred by the output shaft 123 may be applied to the one side of the ice tray 100, such that the ice tray 100 is twisted (second section). When the ice tray 100 which has been already rotated by the A-B section is twisted, the ice may be separated and moved in the direction of gravity. After the ice is separated, the ice tray 100 may be returned to the A point corresponding to the original position.

Therefore, while the ice tray 100 is rotated in engagement with the first output shaft 121, both ends of the ice tray 100 may be rotated toward the B point. While the ice tray 100 is rotated in engagement with the second output shaft 122, only the one side connected to the output shaft 123 between both ends of the ice tray 100 may be rotated toward the C point.

The rotation section may include the forward rotation section including the first and second sections and the reverse rotation section including the third section. The first and second sections may be divided based on the position adjacent to the stopper (not illustrated) for twisting the ice tray 100. The rotation of the ice tray 100 may be performed in order of the first section, the second section and the third section. When the other side of the ice tray 100 is locked to the stopper (not illustrated), the ice tray 100 may be rotated in engagement with the second output shaft 122 to increase the torque of the output unit 120. Furthermore, the rotation of the second section may be controlled by low pps, in order to lower the rotational speed of the ice tray 100.

The rotation section may be divided into the forward rotation section including the first and second sections and the reverse rotation section including the third section. The first and second sections may be divided based on the position corresponding to the rotation angle of the ice tray 100 at which the twisting of the ice tray 100 is started. The rotation may be performed in order of the first section, the second section and the third section, and pulse control may be performed in such a manner that the first and third sections have a lower torque than the second section. For example, the first and third sections may be driven at higher pps than the second section.

The rotation section of the ice tray 100 may be divided in the A-B section (first section), the B-C section (second section) and the C-A section (third section). The A-B section is where the ice tray 100 is rotated up to the angle at which ice can drop in the direction of gravity, and the B-C section is where the ice tray 100 is twisted by the rotational force of the motor unit 40 in order to separate ice. Furthermore, the C-A section is where the ice tray 100 is returned to the original position to contain water therein.

When the ice tray 100 is formed of elastic resin, the B-C section for twisting the ice tray 100 requires a higher torque than the A-B section for rotating the ice tray 100. Thus, the rotational speed may be raised, and the torque may be lowered. As described above, when the same rotational force is provided from the motor unit 40, the change of the rotational speed through the gear ratio may change the torque. At this time, the rotational speed and the torque may be changed in inverse proportion to each other. That is, since the gear ratio can be variably set for each of the sections even though the same rotational force is transferred, the rotational speed and the torque can be changed.

Among the above-described three sections, the B-C section may have the highest torque applied thereto. In the A-B section and the C-A section, the speed may be preferentially considered and adjusted. The angles of the respective sections are only examples, and may be changed to various values by a person skilled in the art.

As described above, the motor unit 40 may include a stepping motor. Furthermore, a geared motor as well as the stepping motor may be used as the motor unit 40. The motor unit 40 may have a plurality of gears on a side surface thereof, from which the motor shaft 40a is extended. The gear ratio may be adjusted through the plurality of gears n order to increase/decrease the number of rotations of the motor unit 40. Since the number of rotations is inversely proportional to the torque, a person skilled in the art can set the gear ratio of the geared motor in consideration of the torque and the number of rotations.

FIGS. 11 and 12 are diagrams for describing an operation of an ice maker according to a not claimed example.

Referring to FIGS. 11 and 12, the ice maker 10 may include a signal transmitting unit 700 for transmitting an electrical signal 1, a cross output unit 500, a signal receiving unit 600, a gear group 30 and an ice tray 100.

Specifically, the signal transmitting unit 700 may transmit the electrical signal 1 to drive the gear group 30 according to information contained in the electrical signal 1. The electrical signal 1 received from the signal transmitting unit 700 may be transferred to the signal receiving unit 600 through the cross output unit 500. The transfer direction may decide operation information of the driving unit to which the electrical signal 1 is to be finally transferred.

Moreover, the information contained in the electrical signal 1 may be transferred at different pps settings when the electrical signal is transferred in a pulse form, and each pps setting may include specific information. For example, when the electrical signal 1 is transferred at 180pps, the driving unit may be driven in the forward direction, and when the electrical signal 1 is transferred at 500pps, the driving unit may be driven in the reverse direction. The information may contain a rotation angle and torque as well as the information related to the rotation direction.

When the electrical signal 1 is a digital signal composed of 0's, 1's and -1's, a rotational speed, a rotation direction, a rotation angle and a torque may be set according to a combination result of signals transferred to a plurality of signal lines. That is, the electrical signal may be transferred as a bipolar signal. Alternatively, the electrical signal may also be transferred as a unipolar signal. For example, even when the electrical signal is a digital signal of 1's and 0's, the rotational speed, the rotation direction, the rotation angle and the torque may be set according to a combination result of signals transferred to the plurality of signal lines. That is, one or more of the bipolar signal and the unipolar signal may be applied as the electrical signal.

The rotation direction, the rotation angle, the rotational speed and the torque can be decided according to the above-described information. In the present example, however, the rotation direction, the rotation angle, the rotational speed and the torque may be decided according to the electrical signal 1 which is cross-transmitted through the cross output unit 500. That is, the rotation direction, the rotation angle, the rotational speed and the torque may be decided according to various piece of information, such as the type of information cross-transmitted through the cross output unit 500, a point of time that information is cross-transmitted through the cross output unit 500, and the number of times that information is cross-transmitted through the cross output unit 500. The signal receiving unit 600 or a drive 900 receiving the electrical signal 1 transferred through the cross output unit 500 can convert the information into rotation information, when the electrical signal 1 containing preset data is received.

The electrical signal 1 transferred from the cross output unit 500 may be received by the signal receiving unit 600 and then transferred to the gear group 30. The gear group 30 may be driven in response to the electrical signal transferred thereto. The gear group 30 may include a drive 900 and the motor unit 40. The drive 900 may transfer information to drive the motor unit 40, and generate rotation information to rotate the motor unit 40. At this time, the generation may indicate a process of analyzing the information contained in the received electrical signal 1. The generation may be performed according to predefined rules, and the predefined rules may correspond to the contents of the information contained in the electrical signal 1.

When the drive 900 generates the rotation information for rotating the motor unit 40, the rotation information may be transferred to the motor unit 40, and the motor unit 40 may be driven in response to the rotation information. At this time, power to rotate the motor unit may be supplied through a separate power line 50. For example, a voltage for transmitting the electrical signal 1 may be set to 5V, and a voltage for driving the motor unit 40 may be set to 12V. The power line 50 may be connected to the gear group 30 in order to transfer the power. That is, the power may be transferred to the drive 900 or the motor unit 40.

The transferred power may rotate the motor unit 40, and rotate one side of the ice tray 100 connected to the shaft of the motor unit 40. The one side of the ice tray 100 may be connected to the motor unit 40 and rotated across the entire section with the motor unit 40 through the rotation of the motor unit 40, and the other side of the ice tray 100 may be rotated only by the predetermined section with the motor unit 40 until the other side is locked to the stopper (not illustrated). In the other section obtained by excluding the predetermined section from the entire section, only the one side of the ice tray 100 is rotated. Thus, the ice tray 100 can be twisted. The ice tray 100 may be disposed in sub-zero temperatures while containing water therein. Thus, when the water is changed to ice, the ice tray 100 may be twisted to separate the ice.

When the ice tray 100 is twisted to separate the ice, the motor unit 40 may be driven to twist the ice tray 100. At this time, the drive 900 may generate rotation information based on the electrical signal 1, and transfer the rotation information to the motor unit 40. That is, in the present example, the electrical signal 1 may be set to the rotation information by a selective transmission of the cross output unit 500, in order to separate ice.

As illustrated in FIG. 11, the electrical signal 1 transferred from the signal transmitting unit 700 may be converted into rotation information while the signal transmitting unit 700 transmits/receives the electrical signal 1 to/from a signal converter. The rotation information may be transmitted to the motor unit 40. The motor unit 40 may be rotated in response to the transmitted rotation information (converted electrical signal).

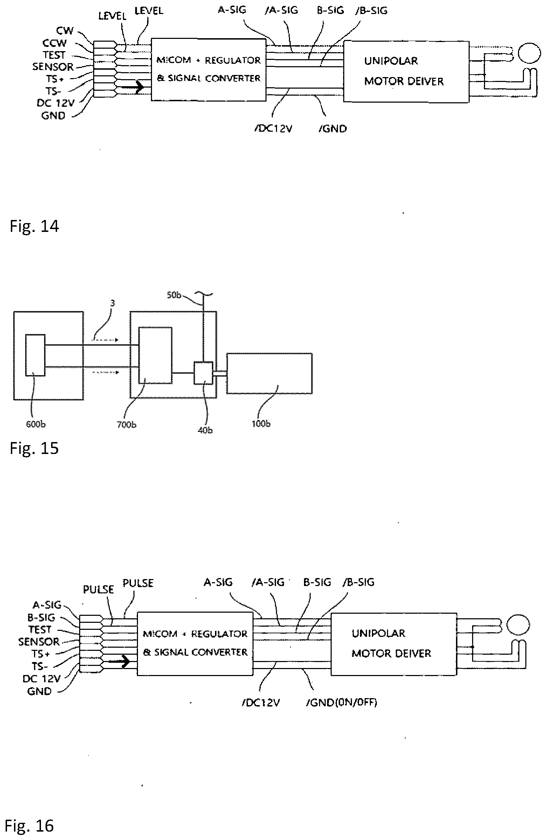

FIGS. 13 and 14 are diagrams for describing an operation of an ice maker 10 according to a not claimed example.

Referring to FIGS. 13 and 14, the ice maker 10 may include a signal transmitting unit 700a for transmitting an electrical signal 2, a signal receiving unit 600a, an operating unit 800a and an ice tray 100a.

Specifically, the signal transmitting unit 700 may transmit the electrical signal 2 to drive the operating unit 800a according to information contained in the electrical signal 2. The electrical signal 2 received from the signal transmitting unit 700a may be transferred to the signal receiving unit 600a. The transfer direction may decide operation information of the driving unit to which the electrical signal 2 is to be finally transferred.

Moreover, the information contained in the electrical signal 2 may be transferred at different pps settings when the electrical signal 2 is transferred in a pulse form, and each pps setting may include specific information. For example, when the electrical signal 2 is transferred at 180pps, the driving unit may be driven in the forward direction, and when the electrical signal 2 is transferred at 500pps, the driving unit may be driven in the reverse direction. The information may contain a rotation angle and torque as well as the information related to the rotation direction. When the electrical signal 2 is a digital signal composed of 0's, 1's and -1's, the rotation direction, the rotation angle and the torque may be set according to a combination result of signals transferred to a plurality of signal lines.

The electrical signal 2 may be received by the signal receiving unit 600a, and transferred to the operating unit 800a. The operating unit 800a may be driven in response to the electrical signal transferred thereto. The operating unit 800a may include a drive 900a and a motor unit 40. The drive 900a may transfer information to drive the motor unit 40, and generate rotation information to rotate the motor unit 40. At this time, the generation may indicate a process of analyzing the information contained in the received electrical signal 2. The generation may be performed according to predefined rules, and the predefined rules may correspond to the contents of the information contained in the electrical signal 2.

When the drive 900a generates the rotation information for rotating the motor unit 40, the rotation information may be transferred to the motor unit 40, and the motor unit 40 may be driven in response to the rotation information. At this time, power to rotate the motor unit may be supplied through a separate power line 50a. For example, a voltage for transmitting the electrical signal 2 may be set to 5V, and a voltage for driving the motor unit 40 may be set to 12V. The power line 50a may be connected to the operating unit 800a in order to transfer the power. That is, the power may be connected and transferred to the drive 900 or the motor unit 40.

The transferred power may rotate the motor unit 40, and rotate one side of the ice tray 100a connected to the shaft of the motor unit 40. The one side of the ice tray 100a may be connected to the motor unit 40 and rotated across the entire section with the motor unit 40 through the rotation of the motor unit 40, and the other side of the ice tray 100a may be rotated only by a predetermined section with the motor unit 40 until the other side is locked to the stopper (not illustrated). In the other section obtained by excluding the predetermined section from the entire section, only the one side of the ice tray 100a is rotated. Thus, the ice tray 100a can be twisted. The ice tray 100a having water contained therein may be disposed in sub-zero temperatures. Thus, when the water is changed to ice, the ice tray 100a may be twisted to separate the ice.

When the ice tray 100a is twisted to separate the ice, the motor unit 40 may be driven to twist the ice tray 100a. At this time, the drive 900a may generate rotation information based on the electrical signal 2, and transfer the rotation information to the motor unit 40.

When the electrical signal 2 is a digital signal composed of 0's, 1's and -1's, a rotational speed, a rotation direction, a rotation angle and a torque may be set according to a combination result of signals transferred to the plurality of signal lines. That is, the electrical signal 2 may be transferred as a bipolar signal. Alternatively, the electrical signal 2 may be transferred as a unipolar signal. For example, even when the electrical signal is a digital signal of 1's and 0's, the rotational speed, the rotation direction, the rotation angle and the torque may be set according to a combination result of signals transferred to the plurality of signal lines. That is, one or more of the bipolar signal and the unipolar signal may be applied as the electrical signal.

As illustrated in FIG. 13, a DC voltage of 12V may be used as power for driving the motor unit 40 which is driven according to the electrical signal 1 transferred from the signal transmitting unit 700a. This may indicate that separate power is received to drive the motor unit 40, but the present invention is not limited thereto. When the separate power is supplied, a DC voltage of 12V may be supplied.

FIGS. 15 and 16 are diagrams for describing an operation of an ice maker according to a not claimed example.

Referring to FIGS. 15 and 16, the ice maker 10 may include a signal transmitting unit 700b for transmitting a rotation signal 3, a signal receiving unit 600b, a motor unit 40b and an ice tray 100b.

Specifically, the signal transmitting unit 700b may transmit the rotation signal 3 such that the motor unit 40b can be rotated according to the rotation signal 3. The rotation signal 3 transmitted to the signal receiving unit 600b from the signal transmitting unit 700b may decide operation information of the driving unit to which the rotation signal 3 is to be finally transferred.

Moreover, the information contained in the rotation signal 3 may be transferred at different pps settings when the rotation signal 3 is transferred in a pulse form, and each pps setting may include specific information. For example, when the rotation signal 3 is transferred at 180pps, the motor unit 40b may be driven rotation signal 3 signal is transferred at 500pps, the motor unit 40b may be driven in the reverse direction. The information may contain a rotation angle and torque as well as the information related to the rotation direction.

When the electrical signal is a digital signal composed of 0's, 1's and -1's, a rotational speed, a rotation direction, a rotation angle and a torque may be set according to a combination result of signals transferred to a plurality of signal lines. That is, the electrical signal may be transferred as a bipolar signal. Alternatively, the electrical signal may be transferred as a unipolar signal. For example, even when the electrical signal is a digital signal of 1's and 0's, the rotational speed, the rotation direction, the rotation angle and the torque may be set according to a combination result of signals transferred to the plurality of signal lines. That is, one or more of the bipolar signal and the unipolar signal may be applied as the electrical signal.

The rotation signal 3 transferred from the signal transmitting unit 700b may be received by the signal receiving unit 600b and then transferred to the motor unit 40b. The motor unit 40b may be driven in response to the electrical signal transferred thereto. The signal receiving unit 600b may transfer rotation information to rotate the motor unit 40b by transmitting information to drive the motor unit 40b. That is, the motor unit 40b may be drive according to a digital or pulse signal, without separately processing or analyzing the transferred information. That is, the digital or pulse signal may correspond to the contents of the information contained in the electrical signal.

When the rotation signal 3 for rotating the motor unit 40b is received, the motor unit 40b may be driven in response to the rotation signal 3. At this time, power to rotate the motor unit 40b may be supplied through a separate power line 50b. For example, a voltage for transmitting the rotation signal 3 may be set to 5V, and a voltage for driving the motor unit 40b may be set to 12V. The power line 50b may be connected to the motor unit 40b in order to transfer the power. That is, the power may be connected and transferred to the motor unit 40.

The transferred power may rotate the motor unit 40b, and rotate one side of the ice tray 100b connected to the shaft of the motor unit 40b. The one side of the ice tray 100b may be connected to the motor unit 40b and rotated across the entire section with the motor unit 40b through the rotation of the motor unit 40b, and the other side of the ice tray 100b may be rotated only by a predetermined section with the motor unit 40b until the other side is locked to a stopper (not illustrated). In the other section obtained by excluding the predetermined section from the entire section, only the one side of the ice tray 100b is rotated. Thus, the ice tray 100b may be twisted. The ice tray 100b may be disposed in sub-zero temperatures while containing water therein. Thus, when the water is changed to ice, the ice tray 100b may be twisted to separate the ice.

When the ice tray 100b is twisted to separate the ice, the motor unit 40b may be driven to twist the ice tray 100b. At this time, the rotation signal 3 may be transferred to the motor unit 40b. In the present example, the rotation signal 3 transmitted from the signal transmitting unit 700b may be transmitted to the motor unit 40b through the signal receiving unit 600b, in order to separate the ice.

As illustrated in FIG. 15, a DC voltage of 12V may be used as power for driving the motor unit 40b which is driven according to the electrical signal transferred from the signal transmitting unit 700b. This may indicate that separate power is received to drive the motor unit 40b, but the present invention is not limited thereto. When the separate power is supplied, a DC voltage of 12V may be supplied.

While various embodiments have been described above, those skilled in the art will appreciate that various modifications, additions and substitutions are possible, without departing from the scope of the invention as disclosed in the accompanying claims. Accordingly, the disclosure described herein should not be limited based on the described embodiments, but decided by the following claims.

## Claims

1. An ice maker that is controlled by a signal received from a refrigerator controller installed in a refrigerator, the ice maker (10) comprising:
a motor unit (40) configured to generate a rotational force corresponding to the signal;
a driving unit (20) comprising a gear group (30) rotated by the motor unit (40); and
an ice tray (100) configured to be twisted by an operation of the gear group (30), and is adapted to contain water therein to make ice,
wherein the ice tray (100) is configured to change a rotational speed one or more times in a rotation section where the ice tray (100) is twisted by the rotational force corresponding to a rotational speed formed at the time of interlocking between gears in the gear group (30),
**characterised in**
**that** the gear group (30) comprises:
a plurality of gears to which the rotational force of the motor unit (40) is transferred, and having a gear ratio to change the rotational speed and the rotational force; and
an output unit (120) engaged with one of the plurality of gears, and configured to transfer a speed-changed rotation to the outside of a control box, wherein the output unit (120) comprises first and second output units configured to receive the rotational force of the motor unit (40) through the plurality of gears, and formed as separate modules so as to be rotated at two gear ratios,
wherein centers of rotation of the first and second output units have a same axis, the first and second output units have each gear teeth which are not formed in the 360 degree direction around the center of rotation of the output unit (120), but formed only at a predetermined section, wherein rotation sections in which the first and second output units are engaged with the respective gear are formed as different from each other, the first and second output units form pitch circles of different size, and the engagement of the first output unit and the engagement of the second output unit with the respective gears is sequentially performed, wherein the respective gears engaged with the first and second output units have a same axis of rotation and form pitch circles of different size.

2. The ice maker of claim 1, wherein the motor unit (40) comprises one or more of an arrangement in which a motor shaft (40a) is extended in the opposite direction of a connection shaft of the output unit (120) and an arrangement in which the motor shaft is eccentrically located with respect to the body of the motor unit (40).

3. The ice maker of claim 1, wherein in a section where the first output unit is rotated in engagement with the corresponding gear, the ice tray (100) is rotated at a higher speed than in a section where the second output unit is rotated in engagement with the corresponding gear, and
in the section where the second output unit is rotated in engagement with the corresponding gear, the ice tray (100) is rotated at a higher torque than in the section where the first output unit is rotated in engagement with the corresponding gear.

4. The ice maker of claim 3, wherein the one side of the ice tray (100) is rotated when the first and second output units are rotated in engagement with the respective gears, and the other side of the ice tray (100) is rotated when only the first output unit is rotated in engagement with the corresponding gear.

5. The ice maker of claim 1, wherein among the plurality of gears of the gear group (30), gears engaged with the output unit (120) have a free rotation section in which the gears are freely rotated before and after the gears are engaged with the output unit (120) in different rotation sections.

6. The ice maker of claim 1, wherein among gear teeth of the second output unit, gear teeth positioned in a start section where the engagement of the first output unit is switched to the engagement of the second output unit have a smaller height than the other gear teeth.

7. The ice maker of claim 1, wherein when the ice tray (100) is close to a stopper located at one side of the ice maker (10), the rotation of the motor unit (40) is pulse-controlled to increase a torque of the ice tray (100).

8. The ice maker of claim 1, wherein the driving unit (20) comprises:
a drive configured to convert the electrical signal received from the signal receiving unit into rotation information; and
the motor unit (40) configured to receive the rotation information from the drive and rotate in response to the rotation information,
wherein the ice maker (10) performs transmission/reception with the refrigerator controller through a plurality of communication lines,
wherein during the reception operation, the ice maker (10) receives the signal from a cross output unit (500) that selectively cross-transmits or non-cross-transmits the signal through the plurality of lines.

9. The ice maker of claim 8, wherein the signal comprises a pulse signal or digital signal, and the rotation information is decided through direction information contained in the signal transmitted by the cross output unit (500).

10. A refrigerator comprising:
a refrigerator controller positioned in the refrigerator;
a signal transmitting unit included in the refrigerator controller, and transmitting a signal;
a cross output unit (500) included in the refrigerator controller, and transmitting the electrical signal received from the signal transmitting unit through a plurality of lines, wherein the cross output unit (500) selectively cross-transmits or non-cross-transmits the electrical signal through the plurality of lines according to control of the refrigerator control unit, **characterised in that**
the refrigerator further comprises an ice maker (10) according to any one of claims 1 to 9.

## Patentansprüche

1. Ein Eisbereiter, der durch ein Signal gesteuert wird, das von einer in einem Kühlschrank installierten Kühlschranksteuerung empfangen wird, wobei der Eisbereiter (10) Folgendes umfasst:
eine Motoreinheit (40), die konfiguriert ist, eine dem Signal entsprechende Drehkraft zu erzeugen;
eine Antriebseinheit (20) umfassend eine von der Motoreinheit (40) gedrehte Zahnradgruppe (30); und
eine Eisschale (100), die konfiguriert ist, durch Betätigung der Zahnradgruppe (30) verdreht zu werden, und angepasst ist, um darin Wasser zu enthalten, um Eis zu erzeugen,
wobei die Eisschale (100) konfiguriert ist, eine Drehgeschwindigkeit ein- oder mehrmals in einem Drehabschnitt zu ändern, in dem die Eisschale (100) durch die der Drehgeschwindigkeit entsprechenden Drehkraft verdreht wird, die während des Eingriffs zwischen Zahnrädern in der Zahnradgruppe (30) gebildet wird,
**dadurch gekennzeichnet, dass**
die Zahnradgruppe (30) Folgendes umfasst:
eine Vielzahl von Zahnrädern, an die die Drehkraft der Motoreinheit (40) übertragen wird, und die ein Übersetzungsverhältnis aufweisen, um die Drehgeschwindigkeit und die Drehkraft zu ändern; und
eine Ausgabeeinheit (120), die mit einem der Vielzahl von Zahnrädern in Eingriff steht und konfiguriert ist, eine drehzahlveränderte Drehung auf die Außenseite eines Steuerkastens zu übertragen,
wobei die Ausgabeeinheit (120) erste und zweite Ausgabeeinheiten umfasst, die konfiguriert sind, die Drehkraft der Motoreinheit (40) durch die Vielzahl von Zahnrädern aufzunehmen und als separate Module ausgebildet sind, um mit zwei Übersetzungsverhältnissen gedreht zu werden,
wobei Drehzentren der ersten und zweiten Ausgabeeinheiten dieselbe Achse aufweisen, die ersten und zweiten Ausgabeeinheiten jeweils Verzahnungen aufweisen, die nicht in 360-Grad-Richtung um das Drehzentrum der Ausgabeeinheit (120) gebildet sind, sondern lediglich an einem vorbestimmten Abschnitt gebildet sind, wobei Drehabschnitte, in denen die ersten und zweiten Ausgabeeinheiten mit dem jeweiligen Zahnrad in Eingriff stehen, als voneinander unterschiedlich ausgebildet sind, die ersten und die zweiten Ausgabeeinheiten unterschiedlich große Teilkreise bilden,
und das Eingreifen der ersten Ausgabeeinheit und das Eingreifen der zweiten Ausgabeeinheit mit den entsprechenden Zahnrädern nacheinander durchgeführt wird, wobei die mit den ersten und zweiten Ausgabeeinheiten in Eingriff stehenden entsprechenden Zahnräder dieselbe Drehachse aufweisen und unterschiedlich große Teilkreise bilden.

2. Eisbereiter gemäß Anspruch 1, wobei die Motoreinheit (40) eine oder mehrere einer Anordnung umfasst, bei der eine Motorwelle (40a) in die entgegengesetzte Richtung einer Verbindungswelle der Ausgabeeinheit (120) verlängert ist, und eine Anordnung, bei der die Motorwelle in Bezug auf den Körper der Motoreinheit (40) exzentrisch angeordnet ist.

3. Eisbereiter gemäß Anspruch 1, wobei in einem Abschnitt, in dem die erste Ausgabeeinheit im Eingriff mit dem entsprechenden Zahnrad gedreht wird, die Eisschale (100) mit einer höheren Geschwindigkeit gedreht wird als in einem Abschnitt, in dem die zweite Ausgabeeinheit im Eingriff mit dem entsprechenden Zahnrad gedreht wird, und
in dem Abschnitt, in dem die zweite Ausgabeeinheit im Eingriff mit dem entsprechenden Zahnrad gedreht wird, die Eisschale (100) mit einem höheren Drehmoment gedreht wird als in dem Abschnitt, in dem die erste Ausgabeeinheit im Eingriff mit dem entsprechenden Zahnrad gedreht wird.

4. Eisbereiter gemäß Anspruch 3, wobei die eine Seite der Eisschale (100) gedreht wird, wenn die ersten und die zweiten Ausgabeeinheiten in Eingriff mit den jeweiligen Zahnrädern gedreht werden, und die andere Seite der Eisschale (100) gedreht wird, wenn nur die erste Ausgabeeinheit im Eingriff mit dem entsprechenden Zahnrad gedreht wird.

5. Eisbereiter gemäß Anspruch 1, wobei unter der Vielzahl von Zahnrädern der Zahnradgruppe (30) Zahnräder, die mit der Ausgabeeinheit (120) in Eingriff stehen, einen freien Drehabschnitt aufweisen, in dem die Zahnräder vor und nach dem Eingriff der Zahnräder mit der Ausgabeeinheit (120) in unterschiedlichen Drehabschnitten frei gedreht werden.

6. Eisbereiter gemäß Anspruch 1, wobei unter den Zahnradzähnen der zweiten Ausgabeeinheit Zahnradzähne, die in einem Startabschnitt positioniert sind, in dem der Eingriff der ersten Ausgabeeinheit auf den Eingriff der zweiten Ausgabeeinheit geschaltet ist, eine geringere Höhe als die anderen Zahnradzähne haben.

7. Eisbereiter gemäß Anspruch 1, wobei, wenn sich die Eisschale (100) in der Nähe eines Stoppers befindet, der sich an einer Seite des Eisbereiters (10) befindet, die Drehung der Motoreinheit (40) pulsgesteuert ist, um ein Drehmoment der Eisschale (100) zu erhöhen.

8. Eisbereiter gemäß Anspruch 1, wobei die Antriebseinheit (20) Folgendes umfasst:
einen Antrieb, der konfiguriert ist, um das von der Signalempfangseinheit empfangene elektrische Signal in Drehinformationen umzuwandeln; und
die Motoreinheit (40), die konfiguriert ist, um die Drehinformationen vom Antrieb zu empfangen und sich als Reaktion auf die Drehinformationen zu drehen,
wobei der Eisbereiter (10) das Senden/Empfangen mit der Kühlschranksteuerung über eine Vielzahl von Kommunikationsleitungen durchführt,
wobei der Eisbereiter (10) während des Empfangsvorgangs das Signal von einer Kreuzausgabeeinheit (500) empfängt, die das Signal durch die Vielzahl von Leitungen selektiv über Kreuz überträgt oder nicht über Kreuz überträgt.

9. Eisbereiter gemäß Anspruch 8,
wobei das Signal ein Impulssignal oder ein digitales Signal umfasst, und die Drehinformation durch Richtungsinformation bestimmt wird, die in dem von der Kreuzausgabeeinheit (500) übertragenen Signal enthalten ist.

10. Kühlschrank, umfassend:
eine im Kühlschrank angeordnete Kühlschranksteuerung;
eine Signalübertragungseinheit, die in der Kühlschranksteuerung enthalten ist, und ein Signal überträgt;
eine Kreuzausgabeeinheit (500), die in der Kühlschranksteuerung enthalten ist und das von der Signalübertragungseinheit empfangene elektrische Signal durch eine Vielzahl von Leitungen überträgt, wobei die Kreuzausgabeeinheit (500) das elektrische Signal entsprechend der Steuerung des Kühlschranksteuergeräts selektiv über die Vielzahl von Leitungen über Kreuz überträgt oder nicht über Kreuz überträgt, **dadurch gekennzeichnet, dass**
der Kühlschrank ferner einen Eisbereiter (10) gemäß einem der Ansprüche 1 bis 9 umfasst.

## Revendications

1. Machine à glaçons qui est commandée par un signal reçu d'un contrôleur de réfrigérateur installé dans un réfrigérateur, la machine à glaçons (10) comprenant :
une unité de moteur (40) conçue pour générer une force de rotation correspondant au signal ;
une unité d'entraînement (20) comprenant un groupe d'engrenages (30) mis en rotation par l'unité de moteur (40) ; et
un plateau à glaçons (100) conçu pour être tourné par actionnement du groupe d'engrenages (30), et qui est apte à contenir de l'eau dedans pour faire de la glace,
le plateau à glaçons (100) étant conçu pour changer de vitesse de rotation une ou plusieurs fois dans une section de rotation où le plateau à glaçons (100) est tourné par la force de rotation correspondant à une vitesse de rotation établie au moment de l'emboîtement entre des engrenages du groupe d'engrenages (30),
**caractérisée en ce que**
le groupe d'engrenages (30) comprend :
une pluralité d'engrenages auxquels la force de rotation de l'unité de moteur (40) est transférée, et ayant un ratio de transmission pour changer la vitesse de rotation et la force de rotation ; et
une unité de sortie (120) engagée dans un de la pluralité d'engrenages, et conçue pour transférer une rotation à vitesse modifiée à l'extérieur d'une boîte de commande, l'unité de sortie (120) comprenant des première et seconde unités de sortie conçues pour recevoir la force de rotation de l'unité de moteur (40) par l'intermédiaire de la pluralité d'engrenages, et réalisées sous forme de modules séparés de manière à pouvoir tourner à deux rapports de transmission,
les centres de rotation des première et seconde unités de sortie ayant un même axe, les première et seconde unités de sortie ayant chacune des dents d'engrenages qui ne sont pas formées dans le sens de 360 degrés autour du centre de rotation de l'unité de sortie (120) mais formées seulement au niveau d'une section prédéterminée, les sections de rotation dans lesquels les première et seconde unités de sortie sont engagées avec l'engrenage respectif étant réalisées différemment les unes des autres, les première et seconde unités de sortie formant des cercles de pas de taille différente,
et l'engagement de la première unité de sortie et l'engagement de la seconde unité de sortie dans les engrenages respectifs étant réalisé séquentiellement, les engrenages respectifs engagés dans les première et seconde unités de sortie ayant un même axe de rotation et formant des cercles de pas de taille différente.

2. Machine à glaçons selon la revendication 1, dans laquelle l'unité de moteur (40) comprend un ou plusieurs agencements dans lesquels un arbre de moteur (40a) s'étend dans le sens opposé d'un arbre de connexion de l'unité de sortie (120) et un agencement dans lequel l'arbre de moteur est situé excentriquement par rapport au corps de l'unité de moteur (40).

3. Machine à glaçons selon la revendication 1, dans laquelle, dans une section dans laquelle la première unité de sortie est tournée en engagement dans l'engrenage correspondant, le plateau à glaçons (100) est mis en rotation à une vitesse plus élevée que dans une section où la seconde unité de sortie est mis en rotation en engagement avec l'engrenage correspondant, et
dans la section où la seconde unité de sortie est mise en rotation en engagement avec l'engrenage correspondant, le plateau à glaçons (100) est mis en rotation à un couple plus élevé que dans la section où la première unité de sortie est mise en rotation en engagement avec l'engrenage correspondant.

4. Machine à glaçons selon la revendication 3, dans laquelle une face du plateau à glaçons (100) est mise en rotation lorsque les première et seconde unités de sortie sont mises en rotation en engagement avec les engrenages respectifs, et l'autre face du plateau à glaçons (100) est mise en rotation lorsque seule la première unité de sortie est mise en rotation en engagement avec l'engrenage correspondant.

5. Machine à glaçons selon la revendication 1, dans laquelle, parmi la pluralité d'engrenages du groupe d'engrenages (30), les engrenages engagés dans l'unité de sortie (120) ont une section de rotation libre dans laquelle les engrenages sont mis en rotation librement avant et après que les engrenages sont engagés dans l'unité de sortie (120) dans différentes sections de rotation.

6. Machine à glaçons selon la revendication 1, dans laquelle, parmi les dents d'engrenages de la seconde unité de sortie, les dents d'engrenages positionnées dans une section de démarrage où l'engagement de la première unité de sortie est commuté sur l'engagement de la seconde unité de sortie ont une hauteur plus faible que les autres dents d'engrenages.

7. Machine à glaçons selon la revendication 1, dans laquelle le plateau à glaçons (100) est proche d'un arrêt situé sur une face de la machine à glaçons (10), la rotation de l'unité de moteur (40) étant commandée par impulsion pour augmenter un couple du plateau à glaçons (100).

8. Machine à glaçons selon la revendication 1, dans laquelle l'unité d'entraînement (20) comprend :
une commande conçue pour convertir le signal électrique reçu de la part de l'unité de réception de signal en une information de rotation ; et
l'unité de moteur (40) étant conçue pour recevoir l'information de rotation de la part de la commande et tourner en réaction à l'information de rotation,
la machine à glaçons (10) réalisant une transmission/réception avec le contrôleur de réfrigérateur par l'intermédiaire d'une pluralité de lignes de communication,
pendant l'opération de réception, la machine à glaçons (10) recevant le signal de la part d'une unité de sortie croisée (500) qui transmet sélectivement de manière croisée ou de manière non croisée le signal par l'intermédiaire de la pluralité de lignes.

9. Machine à glaçons selon la revendication 8, dans laquelle le signal comprend un signal d'impulsion ou un signal numérique, et l'information de rotation est décidée par l'intermédiaire d'informations de direction contenues dans le signal transmis par l'unité de sortie croisée (500).

10. Réfrigérateur comprenant :
un contrôleur de réfrigérateur positionné dans le réfrigérateur ;
une unité de transmission de signal incluse dans le contrôleur de réfrigérateur, et transmettant un signal ;
une unité de sortie croisée (500) incluse dans le contrôleur de réfrigérateur, et transmettant le signal électrique reçu de la part de l'unité de transmission de signaux par l'intermédiaire d'une pluralité de lignes, l'unité de sortie croisée (500) transmettant sélectivement de manière croisée ou de manière non croisée le signal électrique par l'intermédiaire de la pluralité de lignes en fonction de la commande de l'unité de commande de réfrigérateur, **caractérisé en ce que**
le réfrigérateur comprend en outre une machine à glaçons (10) selon l'une quelconque des revendications 1 à 9.
